# EUROPEAN PATENT SPECIFICATION

(11) **EP 3 385 172 B1**
(45) Date of publication and mention of the grant of the patent: **27.11.2019**
(21) Application number: 17380010.3
(22) Date of filing: 05.04.2017
(51) Int. Cl.: B64F 1/36

(54) **DEVICE FOR PROVIDING CONDITIONED AIR TO AN AIRCRAFT**
VORRICHTUNG ZUR BEREITSTELLUNG VON KLIMATISIERTER LUFT IN EINEM FLUGZEUG
DISPOSITIF POUR FOURNIR DE L'AIR CONDITIONNÉ À UN AÉRONEF

(43) Date of publication of application: 10.10.2018
(73) Proprietor: thyssenkrupp Airport Solutions S.A., 33682 Mieres, Asturias (ES); thyssenkrupp AG, 45143 Essen (DE)
(72) Inventor: Ardura Fernández, Jose Manuel, 33207 Gijon Asturias (ES); Murias Bermejo, Antonio, 33212 Gijón Asturias (ES)
(74) Representative: thyssenkrupp Intellectual Property GmbH

(56) References cited:
- EP-A1- 1 184 279
- WO-A1-2011/064808
- US-A1- 2009 197 516

## Description

The invention refers to a device for providing conditioned air to an aircraft installed at an airport gate.

Devices of the generic type are described in WO 2014 108590 A2, US 2002/0195156 A1 and US 2009 / 0197516 A1. In particular US 2009 / 0197516 A1 discloses a device of the generic type, an optical sensor is used for detecting the position of the hose during use, in particular to detect if the hose is in its fully extracted or retracted position. Thereby a reflective marker is provided at the hose, which cooperates with the sensor. During use the marker is often in contact with the ground and is thereby ripped off after a period of time; also dirt pollutes the strip, thus decreasing the reliability of the sensor. The result is damage to the hose and the hose drive, since the drive does not stop operation, even if the hose is in the fully retracted or extracted position.

It is an object of the invention, to improve the existing devices for providing conditioned air to an aircraft, in particular to make the device more robust against the heavy environmental conditions of an airport such as environmental load and mechanical loads. This object is solved by a device according to claim 1 and a use according to claim 5; preferred embodiments are subject of the subclaims and the description.

The inventive device is adapted to provide conditioned air to an aircraft, comprising
- a housing having an housing outlet end,
- a longitudinally collapsible hose at least partially accommodated within said housing, the hose having a hose outlet end to be attached to the aircraft ,
- a hose drive adapted for extracting the hose out of and retracting the hose into the housing, the hose drive is adapted to contact the surface of the hose to selectively push the hose in a first direction outward from the housing or pull the hose in a second direction inwards to the housing,
- a drive control for controlling the hose drive,
- an outward marker attached to the hose,
- at least one sensor for detecting the presence of said outward marker,
wherein the hose comprises an extracted length at least twice the length of the housing.

The hose passes through the housing outlet end, the drive control is adapted to respond to signals from said sensor to control the hose drive. The outward marker is adapted to provide a magnetic signal or a radio signal to the sensor, to which the sensor is sensitive.

The outward marker providing a radio or magnetic signal can be constructed to be more robust against damage. Pollution is not critical anymore, since the outward marker does not work on an optical basis, as the device according to the prior art does. This increases the overall reliability of the device.

In an embodiment the outward marker is covered by an outside surface of the hose. The outside surface of the hose serves as a protective element against damage. In an embodiment the hose comprises a hose material and the outward marker is integrated in the hose material, in particular, it is sewed into the hose material.

In an embodiment the control unit is adapted to stop operation of the hose drive if the sensor detects that the outward marker has reached a predefined position compared to the sensor.

The device is used in particular in a manner in which the longitudinal section of the hose covering the outward marker, is dragged along a stony floor of the airport. The inventive device is robust enough to provide solid function also during such usage. Thereby initially the hose outlet end is located proximate to the housing outlet end, subsequently the hose is pulled away from the housing outlet end supported by the drive unit, subsequently the outlet end is connected to an airplane input end.

The invention is described in more detail with the help of the figures, shown schematically herein:
Fig. 1 shows a generic apparatus for extracting and retracting an air conditioning hose installed at an airport;
Fig. 2 shows the details of the device of figure 1.

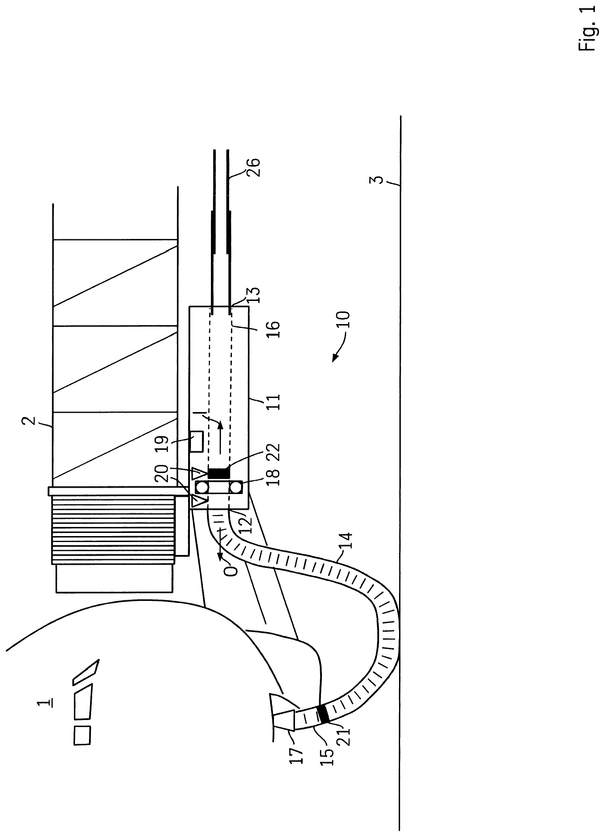

Figure 1 shows an aircraft 1 during a usual situation located at a gate of an airport. The aircraft 1 is standing with its wheels on the airport apron ground 3. A passenger boarding bridge 2 is docked to the aircraft 1.

Attached to the passenger boarding bridge is a device 10 adapted to provide conditioned air to the aircraft 10. The device 10 comprises a hose 14 having an outlet end 15 with a nozzle 17, the nozzle 17 is adapted to be attached to the airplane 1. The hose 14 having an inlet end 16 located to receive conditioned air from a telescopable supply tube 26 or a flexible supply hose (not shown).

The device 10 comprises a housing 11 for accommodating the hose 14 in a retracted position. Within the housing 11 a hose drive 18 is installed for pushing the hose 14 in an outward direction O or to pull the hose 14 in an inward direction I. The hose drive 18 is located in the near of a housing outlet end 12, so the sections of the hose 14, which are pushed by the hose drive 18, are pushed through the outlet end 12 to the outside of the housing 11. A housing inlet end 13 is opposite to the housing outlet end 12; the tube 26 is attached to the housing inlet end 13.

In the extracted position as shown in figure 1, a technician can take the freely suspended hose outlet end 17 and connect it to the aircraft 1 via the nozzle 17. If the hose is in the retracted position, then nearly the complete hose 14 is accommodated within the housing 11. Merely a small length of the hose and the nozzle 16 may be located outside of the housing. It is preferred that in the retracted position the hose 14 is short enough, so that the hose 14 is not lying on the apron ground 3. Thus during movement of the passenger boarding bridge 2 the hose 14 is not dragged along the apron ground 3.

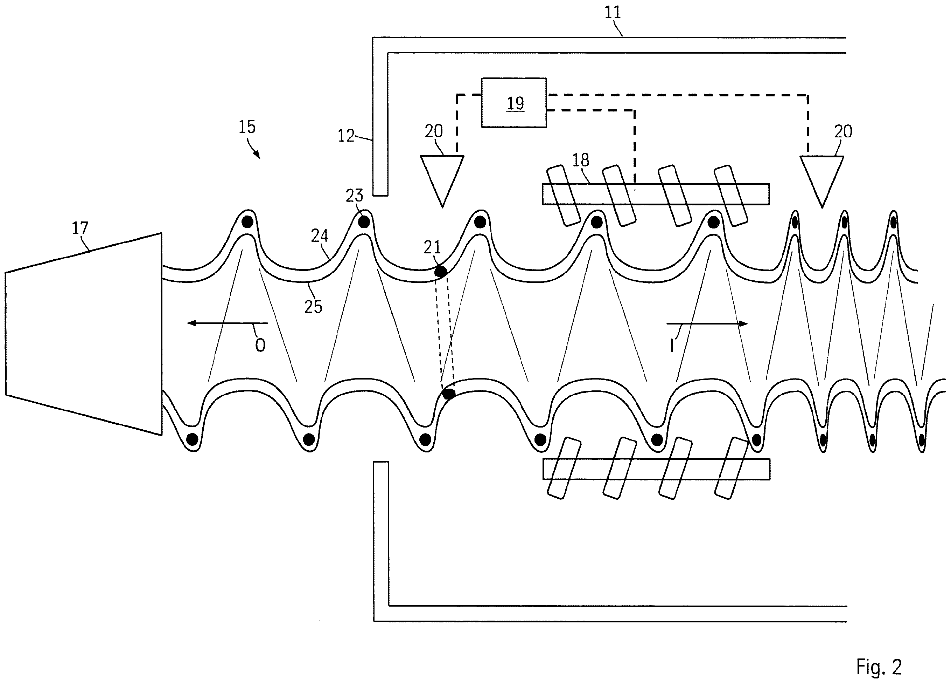

The device 10 comprises a drive control 19, i.e. a microcomputer, which controls the function of the hose drive 18 based on user input. Further at least one sensor 20 (here two sensors) is provided at the outlet housing end. This sensor 20 cooperates with markers 21, 22 attached to the hose. So the sensor 20 detects the presence of the respective marker 21, 22. Based on the sensor signals information about the position of the hose are obtained. If the sensor 20 detects the presence of the inward marker 22, then the hose 14 is fully extracted, as shown in figure 1. If the sensor 20 detects the presence of the outward marker 21, then the hose is fully retracted (see figure 2). Based on the sensor signal the drive control 19 can overrule a user input and force the drive unit 18 to stop.

In general the above described apparatus may have some features of the devices as these are described in WO 2014 108590 A2, US 2002/0195156 A1 and US 2009 / 0197516 A1 .

Figure 2 shows the housing 11 and parts of the hose 14 in more detail. Here the hose 14 is illustrated in its fully retracted position. The nozzle 17 is located closely to the housing outlet end 12, so that no part of the hose 14 is touching the ground 3. The outward marker 21 is in overlapping condition with the sensor 20. The drive control 19 stops any further movement of the hose 14 in inward direction I.

The hose 14 comprises a hose body with an outside surface 24 and an inside surface 25. The outside surface 24 may be made from a robust material; the inner surface 25 may be made from an air tight material. A spiral coil is wound around the hose body 24, 25. The hose drive 18 may comprise a number of worm wheels as described in EP 2944573 A2, interacting with the coils, or any other suitable drive means.

According to the invention the outward marker 21 (as well as the inward marker 22, not shown in figure 2) is covered by the outside surface 24. To enable that the sensor can detect the presence of the outward marker 21, the outward marker is a permanent magnetic element, in particular a strip wound around the circumference of the hose. The magnetic field of the marker 21 can pass the outside surface 24. The sensor 20 is a hall sensor detecting the presence of the marker 21 through the outside surface 24. The marker 21 is thus protected against dirt and mechanical loads, thereby providing a long service life. In an embodiment the outside surface may only cover a limited area of the hose in which the marker is located- it is not essential that the outside surface extends over the entire length of the hose.

In a preferred embodiment the nozzle comprises a handle, at which the technician can grasp the nozzle. Further at the nozzle a control button is provided through which the technician can give control commands to the hose drive 18 or the drive control 19, in particular "a start pulling" or "start pushing" command. Preferably the control button and the handle is arranged in a way that the technician can grasp the handle with at least one hand and at the same press the button with a finger of the same hand.

Not shown but provided is a swivel element between the hose inlet end 13 and the supply tube 26. The hose is connected with the bearing which actually belongs to the housing 11. The tube 26 is connected with the outer part of the housing 11 by means of a flexible connection. This allows the hose to freely rotate within the housing compared to the tube 26 and/or the stationary housing inlet end 13 and thus compensates for any torsional stresses within the hose 14, in particular those caused by the drive 18.

### Reference signs list

- 1: plane
- 2: passenger boarding bridge
- 3: apron ground
- 10: device adapted to provide conditioned air to an aircraft
- 11: housing
- 12: housing outlet end
- 13: housing inlet end
- 14: hose
- 15: hose outlet end
- 16: hose inlet end
- 17: nozzle
- 18: hose drive
- 19: drive control
- 20: sensor
- 21: outward marker
- 22: inward marker
- 23: enforcing structure / coil spring
- 24: outside surface of hose
- 25: inside surface of hose
- 26: supply tube

- O: outward direction
- I: Inward direction

## Claims

1. A device (10) adapted to provide conditioned air to an aircraft (1), comprising
- a housing (11) having an housing outlet end (12),
- a longitudinally collapsible hose (14) at least partially accommodated within said housing (11), the hose (14) having a hose outlet end (15) to be attached to the aircraft (1),
- a hose drive (18) adapted for extracting the hose (14) out of and retracting the hose (14) into the housing (11), the hose drive (18) is adapted to contact the surface of the hose (14) to selectively push the hose (14) in a first direction (O) outward from the housing (11) or pull the hose (14) in a second direction (I) inwards to the housing (11),
- a drive control (19) for controlling the hose drive (18),
- an outward marker (21) attached to the hose (14),
- at least one sensor (20) for detecting the presence of said outward marker (21), wherein the hose comprises an extracted length at least twice the length of the housing,
wherein the hose passes through the housing outlet end,
wherein the drive control (19) is adapted to respond to signals from said sensor (20) to control the hose drive (18),
**characterized in**
**that** the marker (21) is adapted to provide a magnetic signal or a radio signal to the sensor, to which the sensor is sensitive.

2. Device according to claim 1,
**characterized in,**
**that** the outward marker (21) is covered by an outside surface of the hose.

3. Device according to any of the preceding claims,
**characterized in,**
**that** the hose (14) comprises a hose material (24, 25) and that the outward marker (21) is integrated in the hose material, in particular sewed into the hose material (24, 25).

4. Device according to any of the preceding claims,
**characterized in,**
**that** the drive control is adapted to stop operation of the hose drive (18), if the sensor (20) detects, that the marker (21, 22) has reached a predefined position compared to the sensor (20).

5. Use of a device according to any of the preceding claims,
wherein during use, the hose, in particular the longitudinal section of the hose covering the outward marker, is dragged along a stony floor of the airport.

6. Use according to the previous claim, **characterized in that**
initially the hose outlet end is located proximate to the housing outlet end, subsequently the hose is pulled away from the housing outlet end supported by the hose drive,
subsequently the outlet end (15) is connected to an airplane input end.

## Patentansprüche

1. Vorrichtung (10), die eingerichtet ist, einem Flugzeug (1) klimatisierte Luft bereitzustellen, Folgendes umfassend
- ein Gehäuse (11) mit einem Gehäuseauslassende (12) ;
- einen longitudinal zusammenschiebbaren Schlauch (14), der mindestens teilweise innerhalb des Gehäuses (11) untergebracht ist, wobei der Schlauch (14) ein Schlauchauslassende (15) aufweist, das an dem Flugzeug (1) befestigt werden soll,
- einen Schlauchantrieb (18), der zum Ausfahren des Schlauchs (14) aus dem Gehäuse (11) und zum Einfahren des Schlauchs (14) in dieses eingerichtet ist, wobei der Schlauchantrieb (18) eingerichtet ist, die Oberfläche des Schlauchs (14) zu kontaktieren, um den Schlauch (14) wahlweise in eine erste Richtung (O) aus dem Gehäuse (11) heraus zu drücken oder den Schlauch (14) in eine zweite Richtung (I) in das Gehäuse (11) hinein zu ziehen,
- eine Antriebssteuerung (19) zum Steuern des Schlauchantriebs (18),
- eine auswärtige Markierung (21), die an dem Schlauch (14) befestigt ist,
- mindestens einen Sensor (20) zum Detektieren des Vorhandenseins der auswärtigen Markierung (21),
wobei der Schlauch eine ausgefahrene Länge von mindestens zweimal der Länge des Gehäuses umfasst,
wobei der Schlauch durch das Gehäuseauslassende hindurch geht,
wobei die Antriebssteuerung (19) eingerichtet ist, auf Signale aus dem Sensor (20) zu reagieren, um den Schlauchantrieb (18) zu steuern,
**dadurch gekennzeichnet,**
**dass** die Markierung (21) eingerichtet ist, dem Sensor ein magnetisches Signal oder ein Funksignal bereitzustellen, für das der Sensor empfindlich ist.

2. Vorrichtung nach Anspruch 1,
**dadurch gekennzeichnet,**
**dass** die auswärtige Markierung (21) durch eine äußere Oberfläche des Schlauchs abgedeckt ist.

3. Vorrichtung nach einem der vorhergehenden Ansprüche,
**dadurch gekennzeichnet,**
**dass** der Schlauch (14) ein Schlauchmaterial (24, 25) umfasst und dass die auswärtige Markierung (21) in dem Schlauchmaterial, integriert ist, insbesondere in das Schlauchmaterial (24, 25) eingenäht ist.

4. Vorrichtung nach einem der vorhergehenden Ansprüche,
**dadurch gekennzeichnet,**
**dass** die Antriebssteuerung eingerichtet ist, einen Betrieb des Schlauchantriebs (18) zu stoppen, wenn der Sensor (20) detektiert, dass die Markierung (21, 22) eine vordefinierte Position hinsichtlich des Sensors (20) erreicht hat.

5. Verwendung einer Vorrichtung nach einem der vorhergehenden Ansprüche,
wobei der Schlauch, insbesondere der longitudinale Abschnitt des Schlauchs, der die auswärtige Markierung abdeckt, während einer Verwendung über einen Steinboden des Flughafens gezogen wird.

6. Verwendung nach dem vorhergehenden Anspruch, **dadurch gekennzeichnet, dass**
sich das Schlauchauslassende anfänglich in der Nähe des Gehäuseauslassendes befindet,
der Schlauch nachfolgend unterstützt durch den Schlauchantrieb aus dem Gehäuseauslassende weggezogen wird,
das Auslassende (15) nachfolgend mit einem Eingangsende eines Flugzeugs verbunden wird.

## Revendications

1. Dispositif (10) adapté pour fournir de l'air conditionné à un aéronef (1), comprenant
- un logement (11) ayant une extrémité de sortie de logement (12),
- un tuyau flexible rabattable longitudinalement (14) au moins partiellement logé à l'intérieur dudit logement (11), le tuyau flexible (14) ayant une extrémité de sortie de tuyau flexible (15) destinée à être attachée à l'aéronef (1),
- un élément d'entraînement de tuyau flexible (18) adapté pour extraire le tuyau flexible (14) hors du logement (11) et rétracter le tuyau flexible (14) dans ce dernier, l'élément d'entraînement de tuyau flexible (18) est adapté pour entrer en contact avec la surface du tuyau flexible (14) pour sélectivement pousser le tuyau flexible (14) dans une première direction (O), vers l'extérieur, à partir du logement (11) ou tirer le tuyau flexible (14) dans une seconde direction (I), vers l'intérieur, vers le logement (11),
- un élément de commande d'entraînement (19) pour commander l'élément d'entraînement de tuyau flexible (18),
- un repère extérieur (21) attaché au tuyau flexible (14),
- au moins un capteur (20) pour détecter la présence dudit repère extérieur (21),
dans lequel le tuyau flexible comprend une longueur extraite d'au moins deux fois la longueur du logement,
dans lequel le tuyau flexible passe à travers l'extrémité de sortie de logement,
dans lequel l'élément de commande d'entraînement (19) est adapté pour répondre à des signaux provenant dudit capteur (20) pour commander l'élément d'entraînement de tuyau flexible (18),
**caractérisé en ce**
**que** le repère (21) est adapté pour fournir un signal magnétique ou un signal radio au capteur, auquel le capteur est sensible.

2. Dispositif selon la revendication 1, **caractérisé en ce**
**que** le repère extérieur (21) est couvert par une surface extérieure du tuyau flexible.

3. Dispositif selon l'une quelconque des revendications précédentes, **caractérisé en ce**
**que** le tuyau flexible (14) comprend un matériau de tuyau flexible (24, 25) et que le repère extérieur (21) est intégré dans le matériau de tuyau flexible, en particulier cousu dans le matériau de tuyau flexible (24, 25) .

4. Dispositif selon l'une quelconque des revendications précédentes,
**caractérisé en ce**
**que** l'élément de commande d'entraînement est adapté pour arrêter le fonctionnement de l'élément d'entraînement de tuyau flexible (18) si le capteur (20) détecte que le repère (21, 22) a atteint une position prédéfinie par rapport au capteur (20).

5. Utilisation d'un dispositif selon l'une quelconque des revendications précédentes,
dans laquelle, durant l'utilisation, le tuyau flexible, en particulier la section longitudinale du tuyau flexible couvrant le repère extérieur, est traîné le long d'un sol pierreux de l'aéroport.

6. Utilisation selon la revendication précédente, **caractérisée en ce que**
initialement l'extrémité de sortie de tuyau flexible est située à proximité de l'extrémité de sortie de logement,
ensuite le tuyau flexible est éloigné de l'extrémité de sortie de logement, supporté par l'élément d'entraînement de tuyau flexible,
ensuite l'extrémité de sortie (15) est raccordée à une extrémité d'entrée d'aéronef.
